# EUROPEAN PATENT APPLICATION

(11) **EP 4 459 481 A1**
(43) Date of publication of application: **06.11.2024**
(21) Application number: 24183160.1
(22) Date of filing: 19.06.2024
(51) Int. Cl.: G06F 16/535, G06F 16/9032

(54) **IMAGE GENERATING METHOD AND APPARATUS**

(30) Priority: 03.07.2023 CN 202310809065
(71) Applicant: BEIJING BAIDU NETCOM SCIENCE TECHNOLOGY CO., LTD., Beijing 100085 (CN)
(72) Inventor: LIU, Jiachen, Beijing 100085 (CN); XIAO, Xinyan, Beijing 100085 (CN); WU, Hua, Beijing 100085 (CN); LI, Guohao, Beijing 100085 (CN); LI, Wei, Beijing 100085 (CN); ZHU, Hong, Beijing 100085 (CN); SHE, Qiaoqiao, Beijing 100085 (CN); LV, Yajuan, Beijing 100085 (CN)
(74) Representative: von Tietzen und Hennig, Nikolaus

(57) **Abstract**

A computer-implemented image generating method includes: obtaining current dialogue data; determining a requirement type of the user in the current round of dialogue based on the current dialogue data; in response to the requirement type being an image processing requirement, determining an action sequence for implementing the image processing requirement; executing the action sequence to generate a target image; and generating response data corresponding to the user input data based on the target image.

## Description

### TECHNICAL FIELD

The present disclosure relates to the technical field of artificial intelligence, in particular to the technical field of natural language processing, deep learning, large language model etc., and specifically to an image generating method and apparatus, a computer readable storage medium, and a computer program product.

### BACKGROUND

Artificial Intelligence (AI) is the discipline of studying how computers can simulate certain thinking processes and intelligent behaviors of a human being (such as learning, reasoning, thinking, planning, etc.), and there are both hardware-level and software-level technologies. The artificial intelligence hardware technologies generally include technologies such as sensors, special artificial intelligence chips, cloud computing, distributed storage, big data processing, etc. The artificial intelligence software technologies mainly include computer vision technology, speech recognition technology, natural language processing technology, machine learning/deep learning, big data processing technology, knowledge graph technology and other major technological directions.

A Large Language Model (LLM, also known as a large model) is a deep learning model trained using large amount of text data, which can generate natural language text or understand the meaning of natural language text. The large language model can process a variety of natural language tasks, such as dialogue, question and answer, text classification, text generation, etc., and is an important pathway to artificial intelligence. Some large language models also have multi-modal data processing capabilities, such as the ability to process multi-modal data including text, images, videos, etc.

The methods described in this section are not necessarily methods that have been previously conceived or employed. Unless otherwise indicated, it should not be assumed that any method described in this section is considered to be the prior art only due to its inclusion in this section. Similarly, the problems mentioned in this section should not be assumed to be recognized in any prior art unless otherwise indicated.

### SUMMARY

The present disclosure provides an image generating method and apparatus, a computer readable storage medium, and a computer program product.

According to an aspect of the present disclosure, an image generating method is provided, comprising: obtaining current dialogue data, wherein the current dialogue data comprises user input data of the current round of dialogue and historical dialogue data of the historical round of dialogue; determining a requirement type of the user in the current round of dialogue based on the current dialogue data; in response to the requirement type being an image processing requirement, determining an action sequence for implementing the image processing requirement, wherein the action sequence comprises at least one image processing action; executing the action sequence to generate a target image; and generating response data corresponding to the user input data based on the target image.

According to an aspect of the present disclosure, an image generating apparatus is provided, comprising: an obtaining module configured to obtain current dialogue data, wherein the current dialogue data comprises user input data of the current round of dialogue and historical dialogue data of the historical round of dialogue; a first determining module configured to determine a requirement type of the user in the current round of dialogue based on the current dialogue data; a second determining module configured to in response to the requirement type being an image processing requirement, determine an action sequence for implementing the image processing requirement, wherein the action sequence comprises at least one image processing action; an executing module configured to execute the action sequence to generate a target image; and a generating module configured to generate response data corresponding to the user input data based on the target image.

According to an aspect of the present disclosure, a non-transitory computer-readable storage medium that stores computer instructions is provided, wherein the computer instructions are configured to enable a computer to carry out the method described above.

According to an aspect of the present disclosure, a computer program product is provided, including computer program instructions, wherein the computer program instructions, when executed by a processor, implement the method described above.

According to one or more embodiments of the present disclosure, image generation can be implemented conversationally, and the efficiency and convenience of image generation can be improved.

It should be understood that the content described in this section is not intended to identify key or important features of the embodiments of the present disclosure, nor is it intended to limit the scope of the present disclosure. Other features of the present disclosure will become readily understood from the following specification.

### BRIEF DESCRIPTION OF THE DRAWINGS

The drawings exemplarily illustrate embodiments and constitute a part of the specification and are used in conjunction with the textual description of the specification to explain the exemplary implementations of the explanation embodiments. The illustrated embodiments are for illustrative purposes only and do not limit the scope of the claims. Throughout the drawings, like reference numerals refer to similar but not necessarily identical elements.
FIG. 1 illustrates a schematic diagram of an exemplary system in which various methods described herein may be implemented according to embodiments of the present disclosure.
FIG. 2 illustrates a schematic diagram of a conversational image processing system according to an embodiment of the present disclosure.
FIG. 3 illustrates a flowchart of an image generating method according to an embodiment of the present disclosure.
FIG. 4 illustrates a schematic diagram of an image generation process according to an embodiment of the present disclosure.
FIG. 5 illustrates a schematic diagram of the effect of image generation according to an embodiment of the present disclosure.
FIG. 6 illustrates a structural block diagram of a training apparatus of a text generation model according to an embodiment of the present disclosure; and
FIG. 7 illustrates a structural block diagram of an exemplary electronic device that can be used to implement embodiments of the present disclosure.

### DETAILED DESCRIPTION OF EMBODIMENTS

The exemplary embodiments of the present disclosure are described below in conjunction with the accompanying drawings, including various details of the embodiments of the present disclosure to facilitate understanding, and they should be considered as exemplary only. Therefore, one of ordinary skill in the art will recognize that various changes and modifications may be made to the embodiments described herein without departing from the scope of the present disclosure. Similarly, descriptions of well-known functions and structures are omitted in the following description for the purpose of clarity and conciseness.

In the present disclosure, unless otherwise specified, the terms "first", "second" and the like are used to describe various elements and are not intended to limit the positional relationship, timing relationship, or importance relationship of these elements, and such terms are only used to distinguish one element from another. In some examples, the first element and the second element may refer to the same instance of the element, while in some cases they may also refer to different instances based on the description of the context.

The terminology used in the description of the various examples in this disclosure is for the purpose of describing particular examples only and is not intended to be limiting. Unless the context clearly indicates otherwise, if the number of elements is not specifically defined, the element may be one or more. In addition, the terms "and/or" used in the present disclosure encompass any one of the listed items and all possible combinations thereof. "A plurality of" means two or more.

The obtaining, storage and application of users' personal information involved in the technical solutions of the present disclosure are in compliance with relevant laws and regulations and do not violate public order and morals.

An image processing task may be divided into an image generating task and an image editing task.

For the image generation task, the AIGC (AI Generated Content) technical field has ignited everyone's interest in a short period of time by showing great potential in image generation. At present, AI algorithms are able to complete image creation within a minute level, and the production methods of image creation related industries are disrupted.

However, the current mainstream image generation solution uses a text-to-image model to generate an image based on input text, i.e., the "text-to-image" technique, where the text input by a human being is referred to as "prompt". The text-to-image model comprises a Generative Adversarial Network (GAN)-based text-to-image model, a Transformer-based text-to-image model, a Diffusion-based text-to-image model etc. The text-to-image technique needs to be given an explicit and finely optimized prompt to obtain a relatively ideal result. Therefore, this mainstream technique has a high abstract usage barrier, which resulting in low efficiency and high cost of image processing. At the same time, it is usually difficult to meet the user's requirement due to the inability to support multiple rounds of interaction.

Image editing task is usually implemented by using conventional image editing tools (e.g., software such as Photoshop, CorIDRAW). By selecting and using corresponding functions in the image editing tools, a user can independently complete actions such as adding content, deleting content, extracting content, adjusting the size and color of an image, etc. The user needs to be specially trained to use the image editing tools, which results in low efficiency and high cost of image editing and makes it difficult to meet the user's requirement.

As can be seen from the above, the image processing scheme in the related art is not universal, and has a high usage barrier, and does not support or facilitate multi-round interactions with the user, resulting in low efficiency and high cost of image processing, which is difficult to meet the user's requirements.

For the above problems, the embodiments of the present solution provide a conversational image generating method, where a user can complete image processing by engaging in multi-round interactions with an image processing system in a conversational manner, which is convenient to use, and does not require additional learning costs, and greatly improves the efficiency and convenience of image processing. Embodiments of the present disclosure will be described in detail below with reference to the accompanying drawings.

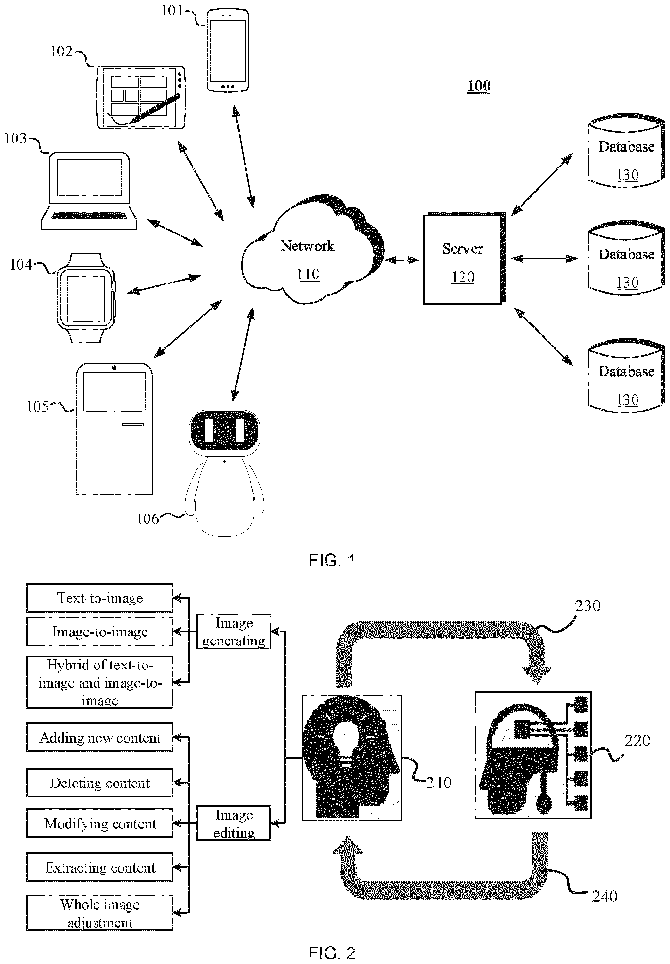

FIG. 1 illustrates a schematic diagram of an exemplary system 100 in which various methods and apparatuses described herein may be implemented in accordance with embodiments of the present disclosure. Referring to FIG. 1, the system 100 includes one or more client devices 101, 102, 103, 104, 105, and 106, a server 120, and one or more communication networks 110 that couple the one or more client devices to the server 120. The client devices 101, 102, 103, 104, 105, and 106 may be configured to execute one or more applications.

In embodiments of the present disclosure, the client devices 101, 102, 103, 104, 105, and 106 and the server 120 may run one or more services or software applications that enable the execution of the image generating method.

In some embodiments, the server 120 may further provide other services or software applications, which may include non-virtual environments and virtual environments. In some embodiments, these services may be provided as web-based services or cloud services, such as to users of the client devices 101, 102, 103, 104, 105, and/or 106 under a Software as a Service (SaaS) model.

In the configuration shown in FIG. 1, the server 120 may include one or more components that implement functions performed by the server 120. These components may include software components, hardware components, or a combination thereof that are executable by one or more processors. A user operating the client devices 101, 102, 103, 104, 105, and/or 106 may sequentially utilize one or more client applications to interact with the server 120 to utilize the services provided by these components. It should be understood that a variety of different system configurations are possible, which may be different from the system 100. Therefore, FIG. 1 is an example of a system for implementing the various methods described herein and is not intended to be limiting.

The client devices 101, 102, 103, 104, 105, and/or 106 may provide interfaces that enable the user of the client devices to interact with the client devices. The client devices may also output information to the user via the interface. Although FIG. 1 depicts only six client devices, those skilled in the art will understand that the present disclosure may support any number of client devices.

The client devices 101, 102, 103, 104, 105, and/or 106 may include various types of computer devices, such as portable handheld devices, general-purpose computers (such as personal computers and laptop computers), workstation computers, wearable devices, smart screen devices, self-service terminal devices, service robots, in-vehicle devices, gaming systems, thin clients, various messaging devices, sensors or other sensing devices, etc. These computer devices may run various types and versions of software applications and operating systems, such as Microsoft Windows, Apple iOS, Unix-like operating systems, Linux or Linux-like operating systems; or include various mobile operating systems, such as Microsoft Windows Mobile OS, iOS, Windows Phone, Android. The portable handheld devices may include cellular telephones, smart phones, tablet computers, personal digital assistants (PDA), etc. The wearable devices may include head-mounted displays (such as smart glasses) and other devices. The gaming systems may include various handheld gaming devices, Internet-enabled gaming devices, etc. The client devices can execute various different applications, such as various Internet related applications, communication applications (e.g., e-mail applications), Short Message Service (SMS) applications, and may use various communication protocols.

The network 110 may be any type of network well known to those skilled in the art, which may support data communication using any of a variety of available protocols (including but not limited to TCP/IP, SNA, IPX, etc.). By way of example only, one or more networks 110 may be a local area network (LAN), an Ethernet-based network, a token ring, a wide area network (WAN), an Internet, a virtual network, a virtual private network (VPN), an intranet, an external network, a blockchain network, a public switched telephone network (PSTN), an infrared network, a wireless network (including, for example, Bluetooth, WiFi), and/or any combination of these and/or other networks.

The server 120 may include one or more general-purpose computers, a dedicated server computer (e.g., a PC (personal computer) server, a UNIX server, a mid-end server), a blade server, a mainframe computer, a server cluster, or any other suitable arrangement and/or combination. The server 120 may include one or more virtual machines running a virtual operating system, or other computing architectures involving virtualization (e.g., one or more flexible pools of a logical storage device that may be virtualized to maintain virtual storage devices of a server). In various embodiments, the server 120 may run one or more services or software applications that provide the functions described below.

The computing unit in the server 120 may run one or more operating systems including any of the operating systems described above and any commercially available server operating system. The server 120 may also run any of a variety of additional server applications and/or intermediate layer applications, including a HTTP server, an FTP server, a CGI server, a Java server, a database server, etc.

In some implementations, the server 120 may include one or more applications to analyze and merge data feeds and/or event updates received from the user of the client devices 101, 102, 103, 104, 105, and/or 106. The server 120 may also include one or more applications to display the data feeds and/or the real-time events via one or more display devices of the client devices 101, 102, 103, 104, 105, and/or 106.

In some embodiments, the server 120 may be a server of a distributed system, or a server incorporating a blockchain. The server 120 may also be a cloud server, or an intelligent cloud computing server or an intelligent cloud host with an artificial intelligence technology. The cloud server is a host product in the cloud computing service system used to overcome the defects of management difficulty and weak service expansibility which exist in the conventional physical host and Virtual Private Server (VPS) service.

The system 100 may also include one or more databases 130. In certain embodiments, these databases may be used to store data and other information. For example, one or more of the databases 130 may be used to store information such as audio files and video files. The database 130 may reside in various locations. For example, the database used by the server 120 may be local to the server 120, or may be remote from the server 120 and may communicate with the server 120 via a network-based or dedicated connection. The database 130 may be of a different type. In some embodiments, the database used by the server 120 may be, for example, a relational database. One or more of these databases may store, update, and retrieve data to and from the database in response to a command.

In some embodiments, one or more of the databases 130 may also be used by an application to store application data. The database used by an application may be a different type of database, such as a key-value repository, an object repository, or a conventional repository supported by a file system.

The system 100 of FIG. 1 may be configured and operated in various ways to enable application of various methods and devices described according to the present disclosure.

FIG. 2 illustrates a schematic diagram of conversational image processing according to an embodiment of the present disclosure.

As shown in FIG. 2, the user 210 may engage in conversation with the image processing system 220 via a client device (e.g., the client devices 101-106 shown in FIG. 1). The image processing system 220 may be, for example, an application deployed in a server (e.g., the server 120 shown in FIG. 1).

In each round of dialogue, the user 210 sends the input data 230 of the current round to the image processing system 220. The image processing system 220 responds to the input data 230, and determines the image processing requirement of the user, and performs corresponding image processing actions to obtain a target image that meets the user's requirement. Further, the image processing system 220 may generate explanation data in the form of text for the target image, and determine the target image and the explanation data as the response data 240, and feed it back to the user.

The user 210 may engage in multiple rounds of dialogue with the image processing system 220. Accordingly, the image processing system 220 can gradually understand the user's requirement in the process of multiple rounds of dialogue and meet the user's requirement through its image generating and image editing capabilities.

In the embodiment of the present disclosure, the user 210 expresses (which may specifically be expressed by means of voice input or text input) their image processing requirements using natural language, and does not need to have any technical background and does not need to learn specific technical knowledge, for example to learn ways of constructing and optimizing the prompt of the text-to-image model. It is understood that when necessary various images can be input as an auxiliary way of expressing requirements in addition to natural language. For example, the user may input or specify an image in the dialogue interface and express the image processing requirements in a text manner. The following is some examples of requirement text that in conjunction with an image:
1. Please help me create an image according to the style of this image;
2. Please create an image by referring to the action of the figure in this image;
3. Please adjust the image generated in the previous round to be more lively.

In addition, the user can evaluate the image processing result returned by the system and further express optimization requirements. In this way, on one hand, the user 210 can gradually iterate the image processing result to meet their requirement; on the other hand, the image processing system 220 may also record the evaluation content of the user as the basis for self-optimization, for example, as the basis for optimizing the large language model, the image processing model called by each image processing action, etc.

Users can express a variety of image processing requirements, and accordingly the image processing system 220 has a variety of image processing capabilities. As shown in FIG. 2, image processing may be divided into two categories: image generating and image editing.

Image generating refers to the image processing system 220 creating an image according to the requirement of a user, which mainly includes three ways:
1. text-to-image: generating a new image using natural language prompt words (prompt) as input. This is usually the most common image generating requirement.
2. image-to-image: generating a new image using an image as input. For example, extracting a line draft, etc.
3. Hybrid of text-to-image and image-to-image: generating a new image using both natural language and an image (possibly a plurality of images) as input at the same time. For example, drawing an image based on text prompt and according to the style of reference FIG. A and the composition of reference FIG. B.

Image editing refers to making specified modification to an existing image (usually an image that has been generated in a history round of dialogue) to obtain a new image. It can be understood that since a new image is obtained through image editing, image editing is also essentially image generating. Image editing operation includes, but is not limited to, the following five types:
1. Adding new content: adding an element at a specified position of an image, and in the case of natural language interaction, the position of the new content may be automatically determined by the system (for example, to add a moon to the image, the position of the moon may be automatically selected.).
2. Deleting content: deleting specified content from an image, which may be specified in terms of position or content.
3. Modifying content: modifying the color, shape, style, etc. of specified content in an image.
4. Extracting content: extracting content elements in an image, such as background, foreground, etc.
5. Whole image adjustment: making adjustment to an image as a whole without specifying specific content or region, such as style conversion, resolution improvement, aspect ratio modification, etc.

In the process of image editing, the means of interaction include not only natural language (e.g., deleting the sun in the image), but also interactive operations on the image (e.g., smearing the region where new content needs to be added through screen swipe gestures)

It is important to note that, unlike traditional image editing tools, each of the image editing capabilities in the Image Processing System 220 essentially includes the creation of the whole or part of an image. For example, the traditional "image matting" can extract specified content from an image, but the "extracting content" of the system may also complete the background part through image creation on the basis of separating the extracted content.

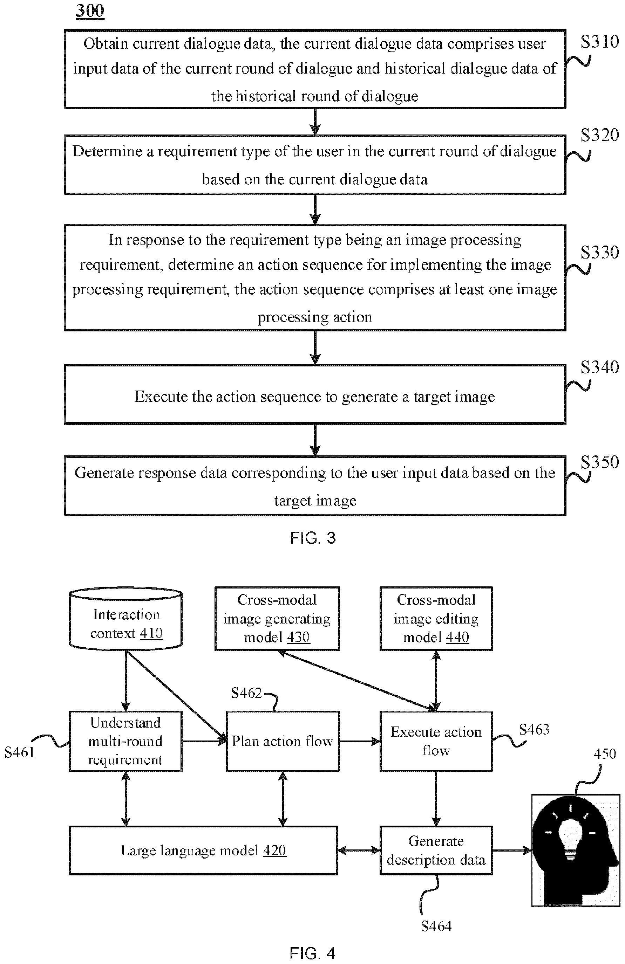

FIG. 3 illustrates a flowchart of an image generating method 300 according to an embodiment of the present disclosure. The execution subject of each step of the method 300 is usually a server, such as the server 120 shown in FIG. 1. More specifically, the method 300 may be performed by the server based on an image processing system deployed therein (e.g., the image processing system 220 shown in FIG. 2). In some embodiments, the execution subject of the method 300 may also be a client device, such as the client devices 101-106 shown in FIG. 1.

As shown in FIG. 3, the method 300 comprises steps S310-S350.

In step S310, obtaining current dialogue data, wherein the current dialogue data comprises user input data of the current round of dialogue and historical dialogue data of the historical round of dialogue.

In step S320, determining a requirement type of the user in the current round of dialogue based on the current dialogue data.

In step S330, in response to the requirement type being an image processing requirement, determining an action sequence for implementing the image processing requirement, wherein the action sequence comprises at least one image processing action.

In step S340, executing the action sequence to generate a target image.

In step S350, generating response data corresponding to the user input data based on the target image.

According to embodiments of the present disclosure, a conversational image generating method is provided in which a user may engage in multiple rounds of interaction with an image processing system in a conversational manner.

In each round of dialogue, based on the current user input data and the context information (i.e., the historical dialogue data), the image processing requirement of the user is automatically identified, the corresponding action sequence is executed to obtain the target image, and the target image is returned to the user as the response data of the current round of dialogue.

The user can complete image processing by engaging in multiple rounds of natural language dialogue with the system with no requirement of specialized learning, which greatly reduces the usage barrier and improves the efficiency and convenience of image processing.

The steps of the method 300 is described in detail below.

For step S310, it can be understood that each historical round of dialogue comprises the historical input data of the user and the historical response data returned by the image processing system in response to the historical input data.

According to some embodiments, the current dialogue data, the user input data, and the historical dialogue data in step S310 may each include at least one of text, voice, or an image. It can be understood that in the case that the current dialogue data, the user input data or the historical dialogue data is voice, the voice can be converted into text by using a voice recognition technology, thereby simplifying the subsequent data processing steps and improving the computational efficiency.

According to some embodiments, step S320 may comprise steps S321 and S322.

In step S321, determining first input data for inputting into a first language model based on the current dialogue data.

In step S322, inputting the first input data into the first language model to obtain the requirement type output by the first language model.

The first language model is a large language model, which usually comprises an N-layer Transformer network with Encoder and Decoder. The large language model is obtained by pre-training using large amount of natural language data. Pre-training enables the large language model to have large amount of priori knowledge and common sense, thereby improving the performance of the model on various tasks.

According to the above embodiment, the pre-trained large language model is used to identify the user's requirement, which can improve the accuracy and flexibility of requirement identification.

According to some embodiments, in step S321, the current dialogue data may be directly used as the first input data.

According to other embodiments, in step S321, a set first template may be used to generate the first input data. Specifically, step S321 may comprise steps S3211 and S3212.

In step S3211, obtaining a set first template. The first template includes first guidance information for guiding the first language model to recognize the requirement type and a first slot to be filled.

In step S3212, filling the current dialogue data into the first slot to obtain the first input data.

According to the above embodiments, the set first template is used to guide the large language model to identify the user's requirement, which can improve the accuracy of requirement identification.

The templates (including the first template, second template and third template, etc.) are used to guide the large language model to perform specific tasks (e.g., requirement identification, target data extraction, action sequence generation, explanation data generation, etc.) and output specific data (e.g., requirement type, target data, action sequence, explanation data, etc.). Generally, each template includes guidance information for guiding the large language model to perform a specific task and one or more slots for filling the related data needed by the large language model to perform the task. It should be noted that different tasks may use different templates. The templates may be preset, dynamically set, experimentally set, or set in other approaches, which are all included in the scope of the disclosure.

According to some embodiments, the first template may include a first slot for filling the current dialogue data and a first slot for filling candidate requirement types. Therefore, the large language model may be guided to select an appropriate requirement type from a plurality of candidate requirement types based on the current dialogue data, which can avoid the large language model from generating an unknown requirement type which would adversely affect the subsequent image processing steps.

For example, the first template may be, for example, ""_", based on the above conversation content, please select an appropriate requirement type in "_"". The underscore in the first template indicates the first slot to be filled, wherein the first first slot is used to fill the current dialogue data and the second first slot is used to fill the plurality of candidate requirement types. Characters other than the underscore in the first template are the first guidance information.

According to some embodiments, after inputting the first input data into the first language model, the first language model, in addition to being able to recognize and output the requirement type, may also extract and output target data for implementing the requirement type from the current dialogue data. It can be understood that for different requirement types, the data content that need to be paid attention to may be different. For example, the current dialogue data may include idle chat data of the user like "I'm so bored, talk to me", which is redundant information that does not need to be paid attention to for the image processing requirement. According to the above embodiments, irrelevant information in the current dialogue data can be filtered out by extracting the target data, thereby improving the efficiency and accuracy of image processing.

Table 1 below illustrates some examples of requirement types and the corresponding target data.

**Table 1**

| **Requirement Type** | **Requirement Description** | **Target Data** |
|---|---|---|
| unclearly expressed requirement | This situation indicates that the user may not be clear about how to interact with the system, and the usage guidance need to be provided to the user. | all the user's input content in the context (i.e., the current dialogue data) |
| inspiration requirement | This situation indicates that the user has not yet determined the requirement, or the system determines that the user's requirement may have space to be further optimized and clarified, and an inspiration recommendation needs to be provided to the user. | requirements that the user has expressed in the context |
| reference content search requirement | This situation indicates that the user is searching content to be used as a reference or control input, and retrievals need to be provided to the user. | content requirement in the context that is explicitly specified by the user, which usually is a reference image |
| image generating requirement | This situation indicates that the user has a clear requirement and requires to generate an image. | the combination of user-expressed requirements content (prompt) in the context, and the associated reference and control input including text and images |
| image editing requirement | This situation indicates that the user requires to make further changes to an existing image (usually that is a generated image). | the image in the context that is used as the editing starting point by the user, and the specific editing requirement |
| image optimizing requirement | This situation indicates that the user has a clear requirement, but specific optimization is required on the existing generated result. | starting point in the context of the user optimization, and the specific direction of the optimization |
| evaluating requirement of image creation | The user expresses evaluation for the generated result to further optimize or improve the system. | user's requirements and feedback results in the context, and the user's requirements and feedback results in the context are recorded as feedback to the system in conjunction with the evaluation content |

According to some embodiments, step S320 may include step S323.

In step S323, inputting the current dialogue data into a classification model to obtain the requirement type output by the classification model.

The classification model may be, for example, a text classification model, an image classification model, etc. The classification model may map data in the form of text or images in the current conversation data to one of the plurality of candidate requirement types. The classification model may be, for example, a neural network model. Compared with the large language model, the classification model has fewer parameters, and is lighter. The requirement type can be quickly determined by using the classification model.

If the requirement type determined in step S320 is an image processing requirement, the action sequence that need to be executed for implementing the image processing requirement is further determined.

In embodiments of the present disclosure, an image processing requirement refers to a requirement involving image processing. For example, in the plurality of requirement types shown in Table 1, the image generating requirement, the image editing requirement, the image optimizing requirement, and the evaluating requirement of image creation are all image processing requirements.

The action sequence comprises at least one image processing action, and the at least one image processing action in the action sequence needs to be executed in a certain order. Two examples of the action sequence are given below:
1. Firstly, the prompt of the user is optimized, and then four image results are generated, and finally, the optimal one is selected and returned to the user.
2. Firstly, the region specified by the user's editing requirement is identified, and then the redrawing of the local region is completed.

According to some embodiments, step S330 may comprise steps S331 and S332.

In step S331, determining second input data for inputting into a second language model based on the image processing requirement.

In step S332, inputting the second input data into the second language model to obtain the action sequence output by the second language model.

The second language model is a pre-trained large language model. In some embodiments, the second language model and the first language model above are the same large language model. According to the above embodiments, the pre-trained large language model is used to generate the action sequence, which can improve the accuracy and flexibility of the action sequence planning.

According to some embodiments, step S330 may comprise steps S333-S335.

In step S333, obtaining a set second template, wherein the second template comprises second guidance information for guiding the second language model to generate the action sequence and a second slot to be filled. The second template may be, for example, "How to implement _?", wherein the underscore indicates the second slot for filling the image processing requirement and the other characters are the second guidance information.

In step S334, filling the image processing requirement into the second slot to obtain the second input data for inputting into the second language model.

In step S335, inputting the second input data into the second language model to obtain the action sequence output by the second language model.

According to the above embodiments, the large language model is used to automatically plan the action sequence, which has high accuracy and flexibility.

According to some embodiments, the corresponding relationship between a plurality of image processing requirements and a plurality of action sequences may be set. Accordingly, in step S330, the action sequence for implementing the image processing requirement may be determined based on the set corresponding relationship between the plurality of image processing requirements and the plurality of action sequences. Thereby, the action sequence can be obtained quickly without additional computation.

The corresponding relationship may be preset, dynamically set, experimentally set, or set in other approaches, which are all included in the scope of the disclosure.

It should be noted that in the set corresponding relationship described above, one image processing requirement may correspond to a plurality of action sequences. Accordingly, in step S330, any one of the plurality of action sequences corresponding to the image processing requirement may be selected and executed in step S340.

The action sequence comprises at least one image processing action. Table 2 illustrates some examples of the image processing action.

**Table 2**

| **Action** | **Action Description** | **Input Parameters of the Action** |
|---|---|---|
| requirement guidance | to guide the user to express their requirement | • key information that user input in the context |
| inspiration | to recommend relevant creative inspirations based on the existing requirement, e.g., to add content, style, retouch, etc. | • user expressed requirement in the context |
| | | • diversity degree and number of inspirations |
| prompt optimization | to automatically optimize the user's requirement text (i.e., the prompt) , so that the final effect of image generation may be better. The prompt optimization is implemented by calling a large language model. A template may be used: "If you want to create a painting for the theme (prompt), please give a relatively detailed description for the scene and the artistry". The output of the large language model is the result of prompt optimization. | |
| | | • user's requirement |
| | | • user's optimization direction |
| reference images retrieval | to retrieve reference images for the style, action or content based on the user's requirement | • user's requirement |
| | | • user's retrieval direction, i.e. retrieve by style, action or content, etc. |
| | | • number of returned retrievals |
| image generating: text-to-imaqe | to generate an image based on requirement text | • requirement text |
| image generating: image-to-image | to generate a new image based on a single image expressing the requirement in conjunction with the requirement text. to generate a new image using the image specified by the user as the starting point and using the text as the condition (optional) | • requirement text |
| | | • requirement image |
| | | • image-to-image mode: e.g., generating a new image using the requirement image as a reference image, generating a new image using a feature image extracted from the requirement image, or generating a new image similar as the requirement imaqe. |
| image generating: hybrid of text-to-image and image-to-image | to generate new images based on any number of texts and images expressing the requirements. to random noise | • requirements text |
| | | • requirement image (can be multiple) |
| | generate new images using as the starting point and using images specified by the user and the text as the condition | • generation configuration: e.g., weight of each requirement image, etc. |
| image editing - element addition | to add new content to an image based on the requirement, that is Inpainting, to add content inside the image, for example, add a rabbit to the forest image | • initial image |
| | | • text that specifies the new element |
| | | • images or text that specify the location of the new element |
| image editing - element modification | to make changes to the content in the image based on the requirement | • initial image |
| | | • text that specifies the element to be modified |
| | | • image or text that specifies the content to be modified |
| image editing - element deletion | to delete content from the image based on the requirement | • initial image |
| | | • image or text that specifies the location of the element to be deleted |
| image editing - image overlay | to overlay the content and style of the other images on the image based on the requirement | • initial image |
| | | overlay image |
| | | • weight of the overlay image |
| image optimization - meta information optimization | to modify the image meta information such as the size, resolution, etc. based on the requirement, if need to delete content, the system automatically determines the region of the deletion, and if need to add content (i.e., outpainting, to add new content outside the region of the current image to expand the image boundaries), the system automatically determines the region of the new content and complement it through creation | • initial image |
| | | • meta information and objects to be adjusted |
| | | • (when need to add content) obtain description of the new content from the requirement from which the initial image is generated |
| image optimization - overall effect optimization | to generate image secondarily based on the optimization requirement | • initial image |
| | | • optimization direction, e.g., the style, composition, etc. |
| image selection | to select the best one from the generated multiple images | • a collection of images that have been generated or edited in the previous action |
| | | • selection strategy, e.g., correlation priority or artistry priority |
| image evaluation collection | to analyze and record users' evaluations and give optimized result based on the evaluations | • evaluation results |
| | | • analysis result for the evaluation content |

According to some embodiments, step S340 may comprise: extracting target data for implementing the image processing requirement from the current dialogue data; for any image processing action in the action sequence: determining input parameters of the image processing action based on the target data; and executing the image processing action based on the input parameters to obtain the result image of the image processing action. The input parameters of each image processing action may refer to, for example, the Table 2 above.

According to the above embodiment, the key target data is extracted from the current dialogue data, and the image processing action is executed using the target data, by which irrelevant information can be filtered out and the efficiency and accuracy of image processing are improved.

According to some embodiments, the target data may be extracted by the first language model. That is, in step S320, the image processing requirement output by the first language model and the target data for implementing the image processing requirement may be obtained by inputting the first input data into the first language model.

According to some embodiments, the image processing action may be executed by calling a corresponding image processing model. For example, the image generating action may be accomplished by calling a cross-modal image generating model and the image editing action may be accomplished by calling a cross-modal image editing model to obtain the result image.

The cross-modal image generating model uses text and/or image as inputs and uses images as outputs, with the inputs as conditions for generating images. The embodiments of the present disclosure do not have strict requirements for the specific implementation of the cross-modal image generating model. Under the current technical conditions, the model with optimal effect is the cross-modal image generating model based on a diffusion generation model. With the development of technologies, the model may also be replaced by a model with better effect. It should be noted that this model is not a common "text-to-image" model. The input of the model can be text, image, and the mixture thereof, the image can be a reference image, a pad image or a feature image, and the input form is flexible.

The cross-modal image editing model uses text, image, and editing options as inputs and makes specified editing changes to the input image. Embodiments of the present disclosure do not have strict requirements for the specific implementation of the cross-modal image editing model, and it is even possible to correspond different editing options to different editing models. However, the capabilities provided by the image editing model should be able to cover the optional editing actions in the action flow planning.

In both of the above models, the text input need be processed, that is, the text input is interpreted as a text vector which involves in subsequent computation, and the comprehension capabilities of the large language model need to be used herein.

In step S350, generating the response data corresponding to the user input data based on the target image.

According to some embodiments, the target image may be directly returned to the user as the response data.

According to other embodiments, the response data comprises the target image and explanation data of the target image. The explanation data comprises, for example, the description of the target image, the process and logic by which the system outputs the target image, etc. Compared to only using the target image as the response data, returning both the target image and the corresponding explanation data to the user can explain more effectively the content of the target image and the process and logic by which the system outputs the target image to the user, thereby it is convenient for the user to subsequently optimize the target image in a specific manner.

According to some embodiments, step S350 may comprise steps S351 and S352.

In step S351, inputting the target image and a set third template into a third language model to obtain the explanation data for explaining the target image output by the third language model, wherein the third template is used to guide the third language model to generate the explanation data.

In step S352, determining the target image and the explanation data as the response data.

The third language model is a large language model with image-text cross-modal data processing capabilities. That is, the input and data of the large language model may be image, text, or the mixture of both. According to the above embodiment, the large language model with image-text cross-modal data processing capabilities is used to generate the response data, which can improve the generation efficiency and consistency of the response data.

According to some embodiments, the third language model may be the same model as the first language model or the second language model described above.

According to some embodiments, the third template may be, for example, "Please describe the content and artistry of this image, and ask the user how they feel about this image and how to optimize it".

According to some embodiments, in step S351, the action sequence, the target image, and the third template may all be input into the third language model to enable the third language model to generate the explanation data by combining the image processing result and the process of the action flow, by which the process and the logic of the system output can be explained to the user more efficiently, therefore it is convenient for the user to optimize the target image in a specific manner in the next round of dialogue.

According to some embodiments, step S350 may comprise steps S353-S355.

In step S353, inputting the target image into an image-to-text model to obtain description text of the target image output by the image-to-text text model.

In step S354, inputting the description text into a fourth language model to obtain explanation data for explaining the target image output by the fourth language model. The fourth language model is a pre-trained large language model.

In step S355, determining the target image and the explanation data as the response data.

According to the above embodiment, the image-to-text model is first used to generate the description text of the target image, and then the large language model is used to generate the response data. This embodiment is applicable to a large language model that has only a single-modal (text) data processing capability.

According to some embodiments, the image-to-text model may be implemented as a transformer structure that includes an image encoder and a text decoder.

According to some embodiments, the fourth language model may be the same model as the first language model, the second language model, or the third language model above.

FIG. 4 illustrates a schematic diagram of an image generating process according to an embodiment of the present disclosure. As shown in FIG. 4, the image generating process comprises steps S461-S464.

In step S461, in each round of dialogue, obtaining the interaction context 410 (i.e., the current dialogue data) between the current user and the image processing system, and understanding the user's requirement expressed in the interaction context 410 by using the large language model 420. Thereby, a multi-round requirement understanding is achieved.

In step S462, the large language model 420 plans action flow (i.e., the action sequence) based on the user's requirement understood in step S461.

In step S463, executing the action flow by calling the cross-modal image generating model 430 and/or the cross-modal image editing model 440 to obtain a target image.

In step S464, the large language model 420 generates description data corresponding to the target image and returns the target image and the description data thereof to the user 450.

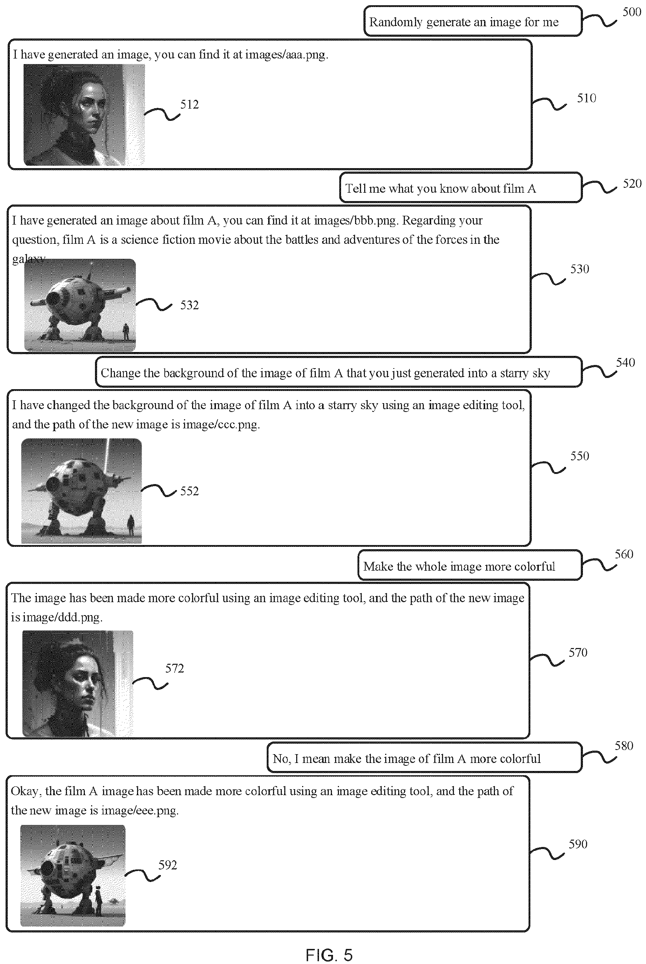

FIG. 5 illustrates a schematic diagram of the effect of image generation according to an embodiment of the present disclosure. In the embodiment shown in FIG. 5, the user engages in multiple rounds of dialogue with the image processing system.

In the first round of dialogue, the user inputs the content 500 "Randomly generate an image for me" in the dialogue interface. In response to the content 500, the image processing system generates the target image 512 and the explanation data thereof "I have generated an image, you can find it at images/aaa.png." using the method 300 of the embodiments of the present disclosure. The combination of the target image 512 and the explanation data thereof is used as the response 510 to the user input content 500.

In a second round of dialogue, the user inputs the content 520 "Tell me what you know about film A" in the dialogue interface. In response to the content 520, the image processing system generates the target image 532 and the explanation data thereof "I have generated an image about film A, you can find it at images/bbb.png. Regarding your question, film A is a science fiction movie about the battles and adventures of the forces in the galaxy." using the method 300 of the embodiments of the present disclosure. The combination of the target image 532 and the explanation data thereof is used as the response 530 to the user input content 520.

In the third round of dialogue, the user inputs the content 540 "Change the background of the image of film A that you just generated into a starry sky" in the dialogue interface. In response to the content 540, the image processing system generates the target image 552 and the explanation data thereof "I have changed the background of the image of film A into a starry sky using an image editing tool, and the path of the new image is image/ccc.png." using the method 300 of the embodiments of the present disclosure. The combination of the target image 552 and the explanation data thereof is used as the response 550 to the user input content 540.

In the fourth round of dialogue, the user inputs the content 560 "Make the whole image more colorful" in the dialogue interface. In response to the content 560, the image processing system generates the target image 572 and the explanation data thereof "The image has been made more colorful using an image editing tool, and the path of the new image is image/ddd.png." using the method 300 of the embodiments of the present disclosure. The combination of the target image 572 and the explanation data thereof is used as the response 570 to the user input content 560.

In the fifth round of the dialogue, the user inputs the content 580 in the dialogue interface "No, I mean make the image of film A more colorful". In response to the content 580, the image processing system generates the target image 592 and the explanation data thereof "Okay, the film A image has been made more colorful using an image editing tool, and the path of the new image is image/eee.png." using the method 300 of an embodiment of the present disclosure. The combination of the target image 592 and the explanation data thereof is used as the response 590 to the user input content 580.

According to embodiments of the present disclosure, the image processing system can carry out multiple rounds of interaction with the user without limiting the number of rounds, and continuously guide the user to express complete and precise real requirement during the interaction, and gradually approach the ideal result that satisfies the user's requirement in multiple steps, by which both the image generating task and the image editing task can be completed, and the universality of the AI image creation application is significantly improved.

The image processing system according to an embodiment of the present disclosure uses the capabilities of the large language model, and does not require the user to perform specific learning, the user can communicate with the system using natural language, which greatly reduces the usage barrier of AI image creation.

In each step or module that uses a large language model, the effect of using the large language model may be further improved by means of prompt optimization, in-context (context examples) learning, etc. For example, the large language model may be first called without using context examples, and the processing effect of the large language model on each type of task is evaluated. Context examples may be constructed for the type of task with poor effect to improve the processing effect of the large language model on the type of task.

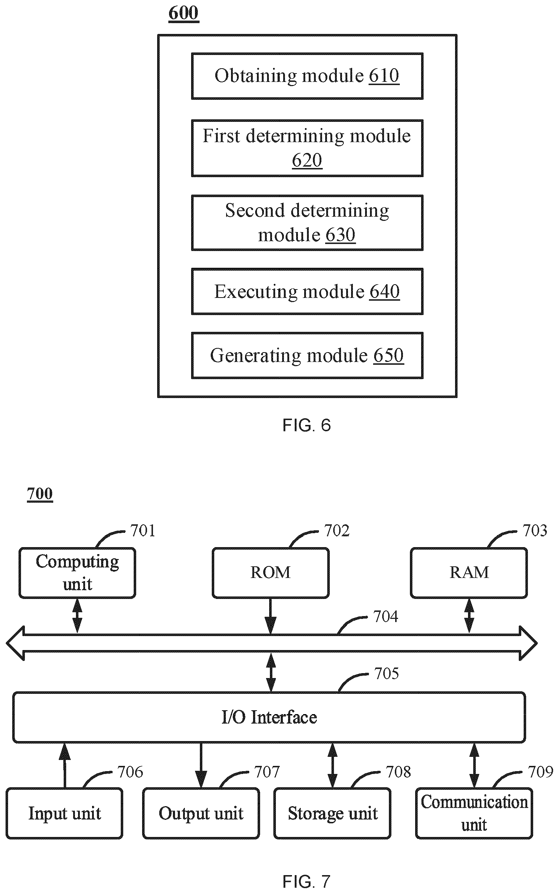

According to embodiments of the present disclosure, there is provided an image generating apparatus. FIG. 6 illustrates a structural block diagram of an image generating apparatus 600 according to embodiments of the present disclosure. As shown in FIG. 6, the apparatus 600 comprises an obtaining module 610, a first determining module 620, a second determining module 630, an executing module 640, and a generating module 650.

The obtaining module 610 is configured to obtain current dialogue data, wherein the current dialogue data comprises user input data of the current round of dialogue and historical dialogue data of the historical round of dialogue.

The first determining module 620 is configured to determine a requirement type of the user in the current round of dialogue based on the current dialogue data.

The second determining module 630 is configured to determine an action sequence for implementing the image processing requirement in response to the requirement type being an image processing requirement, wherein the action sequence comprises at least one image processing action.

The executing module 640 is configured to execute the action sequence to generate a target image.

The generating module 650 is configured to generate response data corresponding to the user input data based on the target image.

According to embodiments of the present disclosure, there is provided a conversational image generating method, and a user may engage in multiple rounds of interaction with the image processing system in a conversational manner.

In each round of dialogue, based on the current user input data and the context information (i.e., the historical dialogue data), the image processing requirement of the user is automatically identified, the corresponding action sequence is executed to obtain the target image, and the target image is returned to the user as the response data of the current round of dialogue.

The user can complete image processing by engaging in multiple rounds of natural language conversation with the system with no requirement of specialized learning, which greatly reduces the usage barrier and improves the efficiency and convenience of image processing.

According to some embodiments, the first determining module comprises: a first determining unit configured to determine first input data for inputting into a first language model based on the current dialogue data; and a first input unit configured to input the first input data into the first language model to obtain the requirement type output by the first language model.

According to some embodiments, the first determining unit comprises: an obtaining subunit configured to obtain a set first template, wherein the first template comprises first guidance information for guiding the first language model to identify the requirement type and a first slot to be filled; and a filling subunit configured to fill the current dialogue data into the first slot to obtain the first input data.

According to some embodiments, the first determining module comprises: a second input unit configured to input the current dialogue data into a classification model to obtain the requirement type output by the classification model.

According to some embodiments, the second determining module comprises: an obtaining unit configured to obtain a set second template, wherein the second template comprises second guidance information for guiding the second language model to generate the action sequence and a second slot to be filled; a filling unit configured to fill the image processing requirement into the second slot to obtain second input data for inputting into the second language model; and a third input unit configured to input the second input data into the second language model to obtain the action sequence output by the second language model.

According to some embodiments, the second determining module comprises: a second determining unit configured to determine the action sequence for implementing the image processing requirement based on a set corresponding relationship between the plurality of image processing requirements and the plurality of action sequences.

According to some embodiments, the executing module comprises: an extracting unit configured to extract target data for implementing the image processing requirement from the current dialogue data; a third determining unit configured to determine, for any image processing action in the action sequence, input parameters of the image processing action based on the target data; and an executing unit configured to execute the image processing action based on the input parameters to obtain a result image of the image processing action.

According to some embodiments, the generating module comprises: a fourth input unit configured to input the target image and a set third template into a third language model to obtain explanation data for explaining the target image output by the third language model, wherein the third template is used to guide the third language model to generate the explanation data; and a fourth determining unit configured to determine the target image and the explanation data as the response data.

According to some embodiments, the generating module comprises: a fifth input unit configured to input the target image into an image-to-text model to obtain description text of the target image output by the image-to-text model; a sixth input unit configured to input the description text into a fourth language model to obtain explanation data for explaining the target image output by the fourth language model; and a fifth determining unit configured to determine the target image and the explanation data as the response data.

It should be understood that the various modules and units of the apparatus 600 shown in FIG. 6 may correspond to the various steps in the method 300 described with reference to FIG. 3. Therefore, the operations, features, and advantages described above with respect to method 300 are equally applicable to the apparatus 600 and the modules and units included therein. For the sake of brevity, certain operations, features, and advantages will not be repeated here.

Although specific functions have been discussed above with reference to particular modules, it should be noted that the functions of the various modules discussed herein may be divided into multiple modules, and/or at least some of the functions of the multiple modules may be combined into a single module.

It should also be understood that various techniques may be described herein in the general context of software hardware elements or program modules. The various units described above with respect to FIG. 6 may be implemented in hardware or in hardware incorporating software and/or firmware. For example, these units may be implemented as computer program code/instructions that are configured to be executed in one or more processors and stored in a computer-readable storage medium. Alternatively, these units may be implemented as hardware logic/circuits. For example, in some embodiments, one or more of the modules 610 - 650 may be implemented together in a System on Chip (SoC). The SoC may include an integrated circuit chip (which includes a processor (e.g., a Central Processing Unit (CPU), a microcontroller, a microprocessor, a Digital Signal Processor (DSP), etc.), a memory, one or more communication interfaces, and/or one or more components of other circuits), and may optionally execute the received program code and/or include an embedded firmware to perform functions.

According to an embodiment of the present disclosure, there is further provided an electronic device, comprising: at least one processor; and a memory communicatively connected to the at least one processor, the memory stores instructions executable by the at least one processor, and the instructions are executed by the at least one processor to enable the at least one processor to execute the image generating method according to an embodiment of the present disclosure.

According to an embodiment of the present disclosure, there is further provided a non-transitory computer-readable storage medium that stores computer instructions, wherein the computer instructions enable the computer to execute the image generating method according to an embodiment of the present disclosure.

According to embodiments of the present disclosure, there is further provided a computer program product, including computer program instructions, wherein the computer program instructions, when executed by a processor, implement the image generating method according to an embodiment of the present disclosure.

Referring to FIG. 7, a structural block diagram of an electronic device 700 that may be a server or client of the present disclosure is now described, which is an example of a hardware device that may be applied to aspects of the present disclosure. Electronic devices are intended to represent various forms of digital electronic computer devices, such as laptop computers, desktop computers, workstations, personal digital assistants, servers, blade servers, mainframe computers, and other suitable computers. The electronic devices may also represent various forms of mobile devices, such as personal digital processing, cellular telephones, smart phones, wearable devices, and other similar computing devices. The components shown herein, their connections and relationships, and their functions are merely as examples, and are not intended to limit the implementations of the disclosure described and/or claimed herein.

As shown in FIG. 7, the electronic device 700 includes a computing unit 701, which may perform various appropriate actions and processing according to a computer program stored in a read-only memory (ROM) 702 or a computer program loaded into a random access memory (RAM) 703 from a storage unit 708. In the RAM 703, various programs and data required by the operation of the electronic device 700 may also be stored. The computing unit 701, the ROM 702, and the RAM 703 are connected to each other through a bus 704. Input/output (I/O) interface 705 is also connected to the bus 704.

A plurality of components in the electronic device 700 are connected to a I/O interface 705, including: an input unit 706, an output unit 707, a storage unit 708, and a communication unit 709. The input unit 706 may be any type of device capable of inputting information to the electronic device 700, the input unit 706 may receive input digital or character information and generate a key signal input related to user setting and/or function control of the electronic device, and may include, but is not limited to, a mouse, a keyboard, a touch screen, a track pad, a trackball, a joystick, a microphone, and/or a remote control. The output unit 707 may be any type of device capable of presenting information, and may include, but are not limited to, a display, a speaker, a video/audio output terminal, a vibrator, and/or a printer. The storage unit 708 may include, but is not limited to, a magnetic disk and an optical disk. The communication unit 709 allows the electronic device 700 to exchange information/data with other devices over a computer network, such as the Internet, and/or various telecommunication networks, and may include, but is not limited to, a modem, a network card, an infrared communication device, a wireless communication transceiver and/or a chipset, such as a Bluetooth device, a 802.11 device, a WiFi device, a WiMAX device, a cellular communication device, and/etc.

The computing unit 701 may be a variety of general and/or special purpose processing components with processing and computing capabilities. Some examples of the computing unit 701 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 701 performs the various methods and processes described above, such as the method 300. For example, in some embodiments, the method 300 may be implemented as a computer software program tangibly contained in a machine-readable medium, such as the storage unit 708. In some embodiments, part or all of the computer program may be loaded and/or installed onto the electronic device 700 via the ROM 702 and/or the communication unit 709. When the computer program is loaded to the RAM 703 and executed by the computing unit 701, one or more steps of the method 300 described above may be performed. Alternatively, in other embodiments, the computing unit 701 may be configured to perform the method 300 by any other suitable means (e.g., with the aid of firmware).

Various embodiments of the systems and techniques described above herein may be implemented in a digital electronic circuit system, an integrated circuit system, a field programmable gate array (FPGA), an application specific integrated circuit (ASIC), a dedicated standard product (ASSP), a system of system on a chip system (SoC), a complex programmable logic device (CPLD), computer hardware, firmware, software, and/or combinations thereof. These various embodiments may include: implementation in one or more computer programs that may be executed and/or interpreted on a programmable system including at least one programmable processor, where the programmable processor may be a dedicated or universal programmable processor that may receive data and instructions from a storage system, at least one input device, and at least one output device, and transmit data and instructions to the storage system, the at least one input device, and the at least one output device.

The program code for implementing the method of the present disclosure may be written in any combination of one or more programming languages. These program code may be provided to a processor or controller of a general-purpose computer, a special purpose computer, or other programmable data processing device such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium, which may contain or store a program for use by or in connection with an instruction execution system, device, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of a machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

To provide interaction with a user, the systems and techniques described herein may be implemented on a computer having: a display device (e.g., a CRT (cathode ray tube) or an LCD (liquid crystal display) monitor) for displaying information to a user; and a keyboard and pointing device (e.g., a mouse or trackball) by which a user may provide input to the computer. Other types of devices may also be used to provide interaction with a user; for example, the feedback provided to the user may be any form of perception feedback (e.g., visual feedback, auditory feedback, or tactile feedback); and the input from the user may be received in any form, including acoustic input, voice input, or haptic input.

The systems and techniques described herein may be implemented in a computing system including a back-end component(e.g., as a data server), or a computing system including a middleware component (e.g., an application server), or a computing system including a front-end component (e.g., a user computer with a graphical user interface or a web browser, the user may interact with implementations of the systems and techniques described herein through the graphical user interface or the web browser), or in a computing system including any combination of such back-end components, middleware components, or front-end components. The components of the system may be interconnected by digital data communication (e.g., a communications network) in any form or medium. Examples of communication networks include a local area network (LAN), a wide area network (WAN), the Internet, and a blockchain network.

The computer system may include a client and a server. Clients and servers are generally remote from each other and typically interact through a communication network. The relationship between clients and servers is generated by computer programs running on respective computers and having a client-server relationship to each other. The server may be a cloud server, or may be a server of a distributed system, or a server incorporating a blockchain.

It should be understood that the various forms of processes shown above may be used, and the steps may be reordered, added, or deleted. For example, the steps described in the present disclosure may be performed in parallel or sequentially or in a different order, as long as the results expected by the technical solutions disclosed in the present disclosure can be achieved, and no limitation is made herein.

Although embodiments or examples of the present disclosure have been described with reference to the accompanying drawings, it should be understood that the foregoing methods, systems, and devices are merely exemplary embodiments or examples, and the scope of the present disclosure is not limited by these embodiments or examples, but is only defined by the authorized claims and their equivalents. Various elements in the embodiments or examples may be omitted or may be replaced by equivalent elements thereof. Further, the steps may be performed by a different order than described in this disclosure. Further, various elements in the embodiments or examples may be combined in various ways. Importantly, with the evolution of the technology, many elements described herein may be replaced by equivalent elements appearing after the present disclosure.

## Claims

1. A computer-implemented image generating method, comprising:
obtaining (S310) current dialogue data, wherein the current dialogue data comprises user input data of the current round of dialogue and historical dialogue data of the historical round of dialogue;
determining (S320) a requirement type of the user in the current round of dialogue based on the current dialogue data;
in response to the requirement type being an image processing requirement, determining (S330) an action sequence for implementing the image processing requirement, wherein the action sequence comprises at least one image processing action;
executing (S340) the action sequence to generate a target image; and
generating (S350) response data corresponding to the user input data based on the target image.

2. The method according to claim 1, wherein determining the requirement type of the user in the current round of dialogue based on the current dialogue data comprises:
determining first input data for inputting into a first language model based on the current dialogue data; and
inputting the first input data into the first language model to obtain the requirement type output by the first language model.

3. The method according to claim 2, wherein determining the first input data for inputting into the first language model based on the current dialogue data comprises:
obtaining a set first template, wherein the first template comprises first guidance information for guiding the first language model to identify the requirement type and a first slot to be filled; and
filling the current dialogue data into the first slot to obtain the first input data.

4. The method according to claim 1, wherein determining the requirement type of the user in the current round of dialogue based on the current dialogue data comprises:
inputting the current dialogue data into a classification model to obtain the requirement type output by the classification model.

5. The methods according to any one of claims 1-4, wherein determining the action sequence for implementing the image processing requirement comprises:
obtaining a set second template, wherein the second template comprises second guidance information for guiding the second language model to generate the action sequence and a second slot to be filled;
filling the image processing requirement into the second slot to obtain second input data for inputting into the second language model; and
inputting the second input data into the second language model to obtain the action sequence output by the second language model.

6. The method according to any one of claims 1-4, wherein determining the action sequence for implementing the image processing requirement comprises:
determining the action sequence for implementing the image processing requirement based on a set corresponding relationship between a plurality of image processing requirements and a plurality of action sequences.

7. The method according to any one of claims 1-6, wherein executing the action sequence to generate the target image comprises:
extracting target data for implementing the image processing requirement from the current dialogue data; and
for any image processing action in the action sequence:
determining input parameters of the image processing action based on the target data; and
executing the image processing action to obtain a result image of the image processing action based on the input parameters.

8. The method according to any one of claims 1-7, wherein generating the response data corresponding to the user input data based on the target image comprises:
inputting the target image and a set third template into a third language model to obtain explanation data for explaining the target image output by the third language model, wherein the third template is used to guide the third language model to generate the explanation data; and
determining the target image and the explanation data as the response data.

9. The method according to any one of claims 1-7, wherein generating the response data corresponding to the user input data based on the target image comprises:
inputting the target image into an image-to-text model to obtain description text of the target image output by the image-to-text model;
inputting the description text into a fourth language model to obtain explanation data for explaining the target image output by the fourth language model; and
determining the target image and the explanation data as the response data.

10. An image generating apparatus (600), comprising:
an obtaining module (610), configured to obtain current dialogue data, wherein the current dialogue data comprises user input data of the current round of dialogue and historical dialogue data of the historical round of dialogue;
a first determining module (620), configured to determine a requirement type of the user in the current round of dialogue based on the current dialogue data;
a second determining module (630), configured to in response to the requirement type being an image processing requirement, determine an action sequence for implementing the image processing requirement, wherein the action sequence comprises at least one image processing action;
an executing module (640), configured to execute the action sequence to generate a target image;
a generating module (650), configured to generate response data corresponding to the user input data based on the target image.

11. The apparatus according to claim 10, wherein the first determining module comprises:
a first determining unit, configured to determine first input data for inputting into a first language model based on the current dialogue data; and
a first input unit, configured to input the first input data into the first language model to obtain the requirement type output by the first language model.

12. The apparatus according to claim 11, wherein the first determining unit comprises:
an obtaining subunit, configured to obtain a set first template, wherein the first template comprises first guidance information for guiding the first language model to identify the requirement type and a first slot to be filled; and
a filling subunit, configured to fill the current dialogue data into the first slot to obtain the first input data.

13. The apparatus according to claim 10, wherein the first determining module comprises:
a second input unit, configured to input the current dialogue data into a classification model to obtain the requirement type output by the classification model.

14. A non-transitory computer readable storage medium storing computer instructions, wherein the computer instructions are configured to enable a computer to carry out the method according to any one of claims 1-9.

15. A computer program product, comprising computer program instructions, wherein the computer program instructions, when executed by a processor, implement the method according to any one of claims 1-9.
